# EUROPEAN PATENT APPLICATION

(11) **EP 1 342 411 A1**
(43) Date of publication of application: **10.09.2003**
(21) Application number: 02004913.6
(22) Date of filing: 05.03.2002
(51) Int. Cl.: A01N 25/08, A01N 41/04

(54) **Antimicrobacterial composite material**

(71) Applicant: Luisi & Clement GmbH, 42781 Haan (DE)
(72) Inventor: Luisi, Isabella, 42781 Haan (DE); Clement, Sigrun, 52525 Heinsberg (DE)
(74) Representative: Helbing, Jörg, Dr. Dipl.-Chem.

(57) **Abstract**

The present invention relates to a composite material comprising a microparticle support such as organic or inorganic particles, which has metallic ions and non-metallic cations grafted thereto, a process for producing said composite material and its use.

## Description

The present invention relates to a composite material comprising a microparticle support such as organic or inorganic particles, which has metallic ions and non-metallic cations grafted thereto, a process for producing said composite material and its use.

### Background of the Invention

There are numbers of inventions and developments in non-drug, anti-bacterial materials in the last decade. Some of these materials are applied onto the surface of appliances as metal-ion coatings. Others form a sharp micro-surface that cuts bacterial cells during contact. There are also some materials grafting metallic ions (e.g. Ag⁺, Cu⁺, or Zn²⁺) onto fabric or particles to achieve anti-bacterial purposes.

There are several problems associated with the existing non-drug, anti-bacterial materials, such as high manufacturing, storage and transportation costs. The existing materials use either metallic ion or non-metallic grafting process which does not provide efficient anti-bacterial effects.

Accordingly, there is a need for developing a new material that is relatively low-cost for manufacture, storage, transpiration and post-disposition processes, and a highly efficient for applications.

### Summons of the Invention

The present invention relates to
(1) a composite material ("Composite of the Invention") comprising a microparticle support having metallic ions and non-metallic cations grafted to the surface of the support;
(2) a preferred embodiment of (1) wherein the composite material comprises organic particles, preferably said particles being
   (a) a copolymer of at least three monomer units, the first monomer unit being an acrylonitrile or a derivative thereof, the second monomer unit being an acrylate ester or derivative thereof, and the third monomer unit being an ethylenically unsaturated monomer having at least one acid group, wherein in said copolymer
   (b) metallic ions are grafted to (i.e. chelated by) the cyano groups of the first monomer units and
   (c) non-metallic cations are grafted to the acid groups of the third monomer unit;
(3) a further preferred embodiment of (1) wherein the composite material comprises inorganic particles;
(4) a method for producing the composite material according to (1) to (3) above which comprises grafting the metallic ions and/or the non-metallic cations to the copolymer;
(5) a carpet, cloth, rubber, filter, paint, polyshield, latex, glue or adhesives comprising the composite of (1) to (3) above;
(6) a polyurethane flexible foam containing the composite material of (1) to (3) above;
(7) a method for preparing the polyurethane flexible foam according to (6) above which comprises preparing a mixture out of the composite material and a polyurethane prepolymer or binder and polymerizing the mixture; and
(8) a pharmaceutical, veterinary, cosmetic or antibacterial composition comprising the composite of (1) to (3) above.

### Detailed Description o the Invention

In accordance with the present invention "grafting" refers to any kind of chemical interaction (e.g., chemical bond, ionic interaction, non-ionic or hydrophobic interaction) between the particles and the metallic ions and non-metallic cations, respectively. With the inorganic particles of embodiment (3) "grafting" means in the most cases - without being bound to any specific theory - salt formation between the negative charges on the surface of the particle and the metallic ions and the non-metallic cations. In case of embodiment (2) "grafting" metallic ions to the cyano groups of the first monomer units means that metallic ions are chelated by the cyano groups of the first monomer. By the same token, "grafting" of the non-metallic cations to the acid groups of the third monomer means that - without being bound to a specific theory - the acid groups form a salt with the non-metallic cations or covalent bond(s) between the non-metallic cations and the acid groups are formed.

In a preferred embodiment of embodiment (2) of the present invention the first monomer unit has the formula 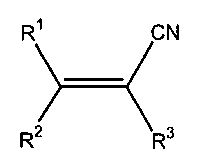 wherein R¹ R² and R³ are independently hydrogen, a C₁₋₃ alkyl group or a halogenated C₁₋₃ alkyl group, preferably R¹ is hydrogen or a C₁₋₃ alkyl group and R² and R³ are hydrogen, most preferably R¹, R² and R³ are hydrogen. The above monomer may have E or Z configuration.

In another preferred embodiment the second monomer unit is selected from C₁₋₃ alkyl esters of acids selected from acrylic acid, methacrylic acid and crotonic acid, and preferably is methyl or ethyl acrylate.

In a further preferred embodiment the third monomer has the formula 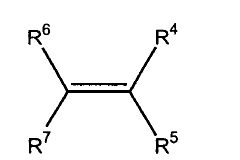 wherein R⁴ is -(CHR⁸)ₙ-CO₂H or -C(CHR⁸)ₙSO₃H (wherein R⁸ is hydrogen, a C₁₋₃ alkyl group, a halogenated C₁₋₃ alkyl group and n is an integer from 0 to 3), R⁵ is CO₂H, CO₂R⁶, a C₁₋₃ alkyl group, a C₁₋₃ halogenated alkyl group or hydrogen, R⁶ and R⁷ are independently hydrogen, a C₁₋₃ alkyl group or a C₁₋₃ halogenated alkyl group, preferably R₄ is -CH₂SO₃H or -CH₂CO₂H, R⁵ is hydrogen or CO₂H and R⁶ and R⁷ are hydrogen. The above monomer may have E or Z configuration.

In the above preferred embodiments the term "C₁₋₃ alkyl group" includes methyl, ethyl, n-propyl and isopropyl groups. "Halogenated C₁₋₃ alkyl groups" include the above C₁₋₃ alkyl groups, wherein 1 or more (optionally all) of the hydrogen atoms are substituted by halogen atoms such a fluorine, chlorine, bromine and iodine.

In the composite of embodiment (2) it is moreover preferred that the molar ratio of monomer units in the copolymer is 87 to 94 % by weight first monomer, 5 to 10 % by weight second monomer, 1 to 3 % by weight third monomer.

The copolymer may be a random or block polymer or a mixture thereof. A block polymer (e.g. of the AB type or of the ABA type where the A block is composed of the first monomer and the B block is composed of the second and third monomer) is preferred.

In embodiment (3) of the invention the preferred inorganic particle is a microporous silicate, such as iolite, and diatomite. The microporous silicate has large amount of micropores which can absorb low-cost silver series substance, such as copper ion or zinc ion, and the non-metallic cations, such as cationic dyes, through cationic interchange. The resulting composite has a broad-spectrum, anti-bacterial and rot resistance effects without changing the basic properties of the support. It can be used on electrical home appliance plastics, plastic films, building coatings, ceramics, rubber items, etc.

The metallic ions are a silver series ions including but not limited to silver ions (Ag⁺), copper ions (Cu⁺) and zinc ions (Zn²⁺). The above ions may be used separately or as a mixture The non-metallic cation preferably is a nitrogen containing compound including, but not limited to, cationic dyes (such as basic green, cationic brilliant blue etc), and other antibacterial aliphatic or aromatic amines or ammonium compounds.

The composite of embodiments (1) to (3) of the invention has antibacterial properties, is mold-resistant and is in solid form and generally in a powder form. The powder size is 200 to 50 mesh. The color of the composite appears different depending on the dyes added during the manufacture process. The color can be green, yellow, blue, black, red, etc.

It is believed that the composite of embodiments (1) to (3) has an anti-bacterial function through incorporating micro-size, micro particle support of poly-microporous, non-metallic mineral (silicate) with copper or zinc ion and cationic dyes. The composite can have long-term, broad-spectrum, anti-bacterial and mold-resistant effect. The composite can be used to make anti-bacterial and mold-resistant plastics, ceramics, building coatings, rubber items, etc. It can also be used in textiles. It has a good anti-bacterial effect and broad effective spectrum. The material is non-toxic, easy to make and easy to maneuver.

One preferred embodiment of the invention is to choose silver-series substance, such as copper and zinc as micro-sized support which can bind organic anti-bacterial groups. Absorb the silver series substance to the support as micro-sized microparticles and graft organic anti-bacterial groups to the support to have a good anti-bacterial and mold-resistance effect.

In a preferred embodiment of the invention, the weigh percentage ratio among copper ion, zinc ion, porous silicate and cationic dyes are as follows: copper and zinc ions : porous silicate : cationic dyes are (20~40) : (1.0~2.0) : (0.1~0.3).

Embodiment (4) of the invention relates to a method of producing the composite of embodiments (1) to (3) which includes grafting the metallic ion and/or the non-metallic cation to the copolymer. In particular, the process is as follows:
1) Preparation of a proper amount of copper or zinc salt at the ratio indicated previously;
2) Addition of a ammoniacal liquor (concentration 26-27%) 20 to 40 ml at room temperature and mixing with the salt to get a liquid mixture with a concentration of 1 g in 1000 to 1500 ml water;
3) Stirring the mixture for 30 to 60 minutes and putting aside for further use;
4) Selecting a proper amount of silicate (diatomite or iolite, over 80 mesh) at the ratio indicated previously;
5) Heating the silicate at 90°C to 100°C for 2 to 3 hours;
6) Adding the heated silicate into the mixture and stir for 2 hours to obtain a reaction mixture;
7) Adding cationic dyes to the reaction mixture at the ratio indicated previously and stir the cationic mixture for 30 to 60 minutes at 80°C to 90°C; and
8) Incubating the cationic mixture at 85 ± 2°C for 30 to 60 minutes, then filtering, washing, and baking the cationic mixture to obtain a powder form of the composite.

In a preferred embodiment of the above process, during the production of the composite, Cationic Brilliant Blue Dyes is added as additive.

In another preferred embodiment of the invention, the composite is parent particles that are composed of anti-bacterial agents, such as zinc sulfate, zinc oxide, silver nitrate, combined with polyethylene and ethylene-vinyl acetate copolymer. The process is complicated because it is confined by the fact that zeolite and water have a poor co-solubilization and a poor compatibility. The zeolite absorption of silver-series substances is described in U.S. Patent No. 5,900,258. China Patent No. 94118576.1 provides a method that treat the composite of plant stem from rush- family chemically and physically to firmly incorporate the micro-size silver particle onto the surface of the support. That method uses a composite of a herbaceous stem so that it is not applicable in high-temperature resistance environment, especially in ceramics. Both the U.S. patent and the China Patent use silver as an anti-bacterial agent. They have high production costs.

Another preferred embodiment of the invention relates to an anti-bacterial and mold-resistance composite that is a microporous non-metallic silicate with copper ion or zinc ion on the silicate surface and in its micropores. The silicate most preferably is a diatomite or an iolite such as the one obtainable from Hongqin Aotu Company, Ltd., Jiang Su province, China.

This invention is used to overcome the defects of existing technology: Provided is a superior micro-size physical anti-bacterial and mold resistance composite and its manufacturing methods. This micro-size physical anti-bacterial and mold resistance composite can be used to make anti-bacterial and mold resistance plastics, ceramics, building coatings, rubber items and et al. It can also be used in fiber and textile.

Compare to the existing techniques, the present invention discloses a low production cost and simple procedure. The invention further discloses a composite that has good anti-bacterial effect, a broad anti-bacterial spectrum. The composite has a prominent killing effect on pathogenic bacteria and fungi, e.g. *Pyogenic streptococcus* (such as *Staphylococcus aureus, beta streptococcus, Streptococcus pneumoniae, meningococcusis, Deplococcus gonorrhoea* and the like), *Enteric bacterium* (such as *Escherichia Coli, Schmitz's bacillus, Salmonella typhi, Salmonella paratyphi. Salmonella typhimurium, Salmonella enteritidis, Bacterium cholerae suis, Morgan's bacillus, Bacillus pneumonia, Pseudomonas aeruginosa* and the like), *Pathogenic fungi* (such as *Candida albicans, Crytococcus neoformans, Trichophyton rubrum, Trichophyton rosaceum, Microsporum gypseum, thread fungus* and the like) etc.

According to embodiment (2) the composite not only can be in form of microparticles, but may also exist in the form of fiber and fabrics, it is called "AB Antibacterial Fiber". AB is derived from both "Anti-bacterial" and the structure of molecule. The invention is the new material exists in fine particles.

Poly Acrylonitrile (PAN) is a well-developed high molecular material. The PAN is put in water and it has high molecular reaction with Cupric Ion and Reducing Agent. The Cupric Ion (Group A) will be grafted to the Cyano Group of PAN. The reaction formed Coordination Complex. The reaction formula is shown in the following Reaction Scheme (1). 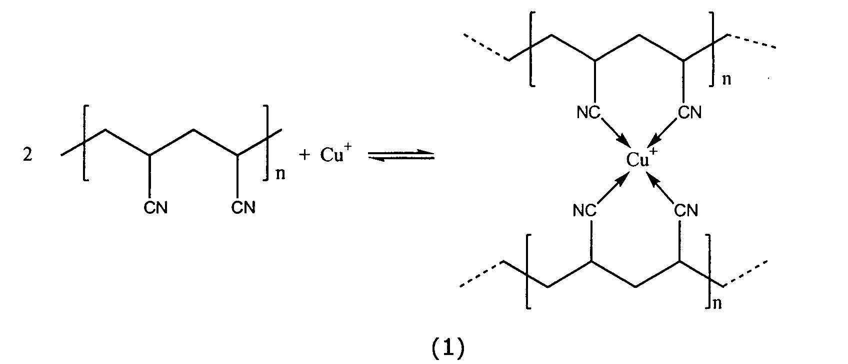 After the above reaction, those intermediate products will continuously react with a Nitrogen Containing Compound, such as Basic Green or other Quaternary Ammonium Compound. The Nitrogen Containing Compound (Group B) will be grafted to the third monomer of the high molecular chain. The reaction is shown in the following Reaction Scheme (2).

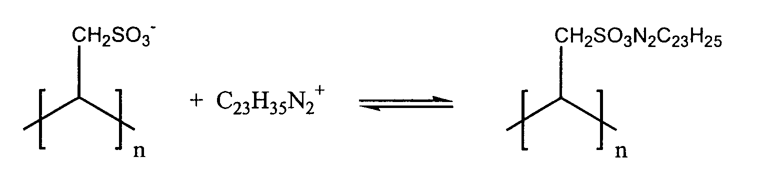

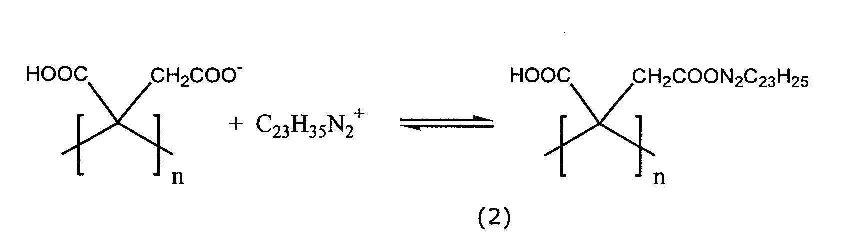

If the above reactions are combined, we will have: 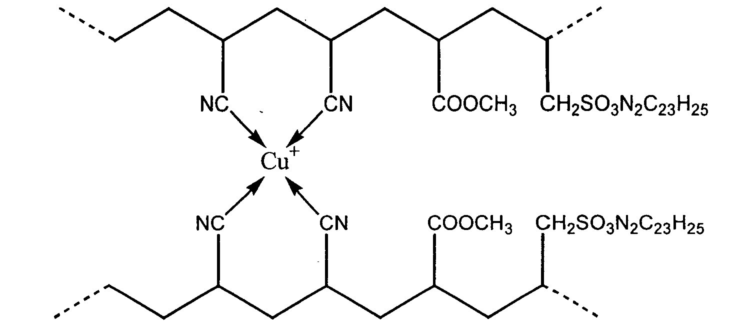 or,

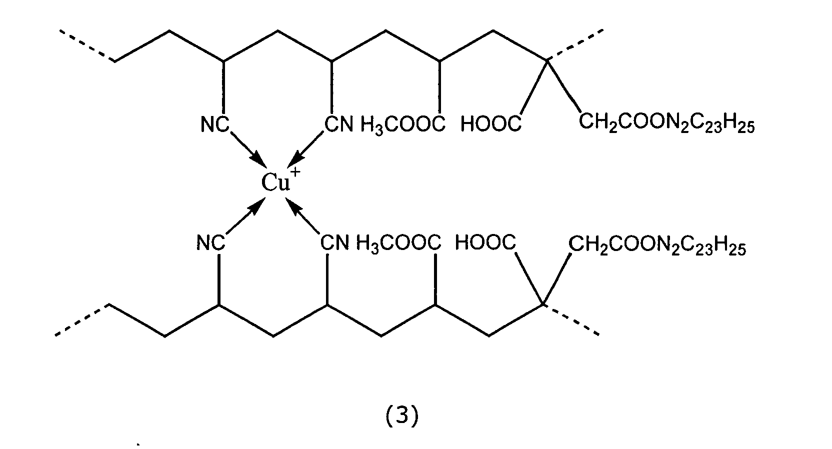

The reaction Formula 3 can be briefed as shown in Formula 4: 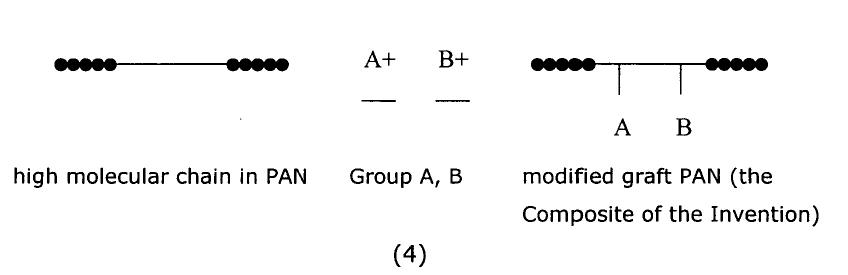 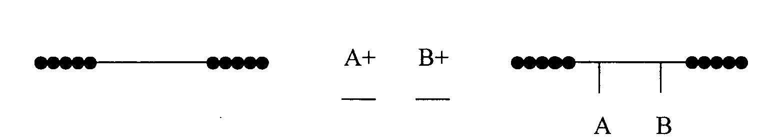 Group A: Silver-series ion containing compound
Group B: Nitrogen containing compound

The modified graft PAN was prepared by grafting group A and group B respectively in the high molecular chain of PAN through chemical reaction.

The above high molecular chemical reaction is a heterogeneous reaction. Therefore, the reaction is taking place on the boundary surface between two phases. Thus, the graft number of group A and group B on the boundary surface is much less than those in homogeneous reaction. We approved with Atomic Absorption Spectrophotometer that the modified graft PAN (the composite) contains about 0.5% of group A (such as Cupric ion). We also approved with Infrared Spectrophotometric Analysis that the graft reaction of group B truly exists. Both group A and group B on the surface has antibacterial function. They work together to give this new antibacterial material the feature of "Killing bacterial with physical contact".

The PAN is a petroleum chemical product. Based on various manufacturer procedures of different companies, the percentage of Cyano group and third monomer may vary a little. Therefore, when its surface gets grafted with group A and group B, the number of group A and group B is flexible accordingly. The flexibility of group A is ± 10% of its 0.5% by weight.

As a conclusion, the composite are allotropic substances. It has exactly the same chemical subconstructure and ingredients, and the same antibacterial spectrum as the AB fiber. The development and application of AB fiber have a history of more than 10 years in China. It may have several different names or trademarks, but all materials are made of AB fiber. The composite is an allotropic substance of AB fiber. All the tests of AB fiber are applied to composite.

The composite is non-toxic environmental-safe material. There are no special storage and dispose requirements for the composite. The end products of the composite may require different handling based on the different materials that the composite is mixed with. In most cases, those materials are all EPA or FDA registered materials and the mixing procedures are also under EPA regulations.

In accordance with embodiments (5) and (6) the composite can be used in Carpet, Cloth, Rubber, Filter, Paint, Poly Shield, Latex, Glue, Adhesive, and can be incorporated into PUR flexible foams. The obtained PUR foams possess excellent antibacterial activities and can be used in hospital and sanitary applications.

The process technology for the preparation of particle foams has reached a high level of development. Therefore, the scope for varying the raw materials which can be employed in principle is very large. In addition to the classical utilization of pure PUR flexible foam scraps, textile scraps, scraps from compact plastics, microcellular polyurethanes and thermoplastic foams can also be used.

However, as in any other production, one essential precondition to the preparation of high quality products having well-defined property profiles is the use of starting materials which are as homogeneous as possible. PUR flake compound foams, such as the so-called REBOND systems, which meet these requirements are prepared from the wide variety of production scraps obtained in the PUR block foam production and processing.

REBOND systems are prepared from selected PUR scraps. The production scraps from the preparation of block foams or molded parts are comminuted to a defined size using commercially available cutting mills. Depending on the intended product properties, flakes having a diameter of from 1 mm to 30 mm are produced.

To ensure the exactly defined property profiles of the REBOND systems, the various types of flexible foam are pretreated separately in terms of ether, ester, Rubex block foam and molded foam. Due to extensive in-company logistics, it is additionally possible to select purposefully by the properties of the starting foam, such as density of foam or resistance to compression.

According to the requirements for the intended end formulation, various types of flakes are mixed in the mass ratios required, and binder systems which are particularly optimized for the individual application are added. The polyurethane prepolymers employed wet the foam flake optimally and ensure homogeneous distribution in the matter being mixed.

The thus prepared mixture is employed both for the preparation of block products and in the production of molded parts. The molding process is similar in principle to block preparation and therefore can be essentially transferred. The flakes wetted with PUR binder are charged by conveying systems into block molds having a base area of up to about 1.20 m * 2.40 m, followed by two-dimensional condensing. The filling height depends on the product properties desired.

The actual reaction is effected by blowing saturated steam of 110-120 °C into the mold and is completed after 10 to 20 minutes. In rare cases, the reaction mixture is preheated with hot air. After several days of drying in an intermediate store, the demolded blocks can be processed by the conventional techniques known from PUR block foam processing. The standard assortment comprises rectangular blanks, contour blanks, profile sheets and sliced products.

The capability of employing defined and selected PUR scraps as the raw material and in addition a wide variety of additives for the purposeful control of additional properties in the preparation of REBOND systems opens a large number of product-specific factors for influencing product properties.

It has moreover been found that the composite of the invention can be utilized as an agent for treatment of itches, cuts and minor wounds and for the treatment of prevention and allevitation of skin diseases of humans and animals. The agent is preferably in form of a powder mixture containing the composite of the invention. This powder mixture can directly be applied to the skin (wound) or can be applied via a suitable carrier material (i.e., or a cloth or fabric). The composite of the invention may also be comprised in pharmaceutical compositions suitable for oral administration.

The agent is also suitable to stabilize perishable products such as cosmetics, process aids, etc.

Finally, the composite of the invention is also suitable for preparing inactivated bacterial compositions, said compositions being suitable as pharmaceuticals, supplements etc. The obtained bacterial composition may contain the composite of the invention or may be free of it.

The followings examples illustrate the present invention, they are, however, not to be construed as limiting the invention:

### Examples

The chemicals listed below were purchased from Weifang No. 3 Industrial chemicals, Shanghai Pudong Chemical and Material Supply and from Guangxi Province Nanning Mineral Products. The iolite and diatomite was purchased from Hongqin Aotu (mineral stone) Company, Ltd., Jiang Su Province, China.

### Example 1 : Iolite as support

1) 0.2 g copper sulfate was dissolved in 500 ml water.
2) 6 ml of 26 to 28% ammoniacal liquor was added and stirred for 30 minutes to get blue copper liquor.
3) 10 g iolite (90 mesh) was baked at 100°C for 2 hours before adding to the copper liquor to obtain a reaction mixture.
4) The reaction mixture was stirred for 2 hours.
5) 0.001 g Cationic Brilliant Blue was added to the reaction mixture and stirred until temperature is up to 80°C to 90°C.
6) The mixture was kept at 85 + 2°C for 30 minutes, then filtered, washed and baked to get bluish green powder.

### Example 2: Iolite as support

1) 0.26 g zinc sulfate was dissolved in 800 ml water.
2) 6 ml 26 to 28% ammoniacal liquor was added and stirred for 30 minutes.
3) 20 g iolite (800 mesh) was baked at 100°C for 2 hours before adding to the preceding solution and stirred for 2 hours to obtain a reaction mixture.
4) 0.0016 g Cationic Brilliant Blue was added to the reaction mixture and stirred it until temperature reached up to 80°C to 90°C.
5) The mixture was kept at 85 + 2°C for 30 minutes, filtered, washed and baked to get bluish green powder.

### Example 3 : Diatomite as support

1) 0.2 g zinc sulfate was dissolved in 600 ml water.
2) 8 ml 26 to 28% ammoniacal liquor was added and stirred for 30 seconds to obtain a mixture.
3) 25 g diatomite (90 mesh) was baked at 100°C for 2 hours before adding the diatomite to the mixture and stirred for 2 hours to obtain a reaction mixture.
4) 0.0015 g Cationic Brilliant Blue was added to the reaction mixture and stirred until temperature was up to 80°C to 90°C.
5) The reaction mixture was kept at 85 + 2°C for 30 minutes, filtered, washed and baked to get bluish green powder.

### Example 4: Diatomite as support

1) 0.3 g zinc sulfate was dissolved in 500 ml water.
2) 8 ml 26 to 28% ammoniacal liquor was added and stirred for 30 minutes to get blue copper liquor a mixture.
3) 20 g diatomite (120 mesh) was baked at 100°C for 2 hours before adding the diatomite to the mixture and stirred for 2 hours to get a reaction mixture.
4) 0.0015 g Cationic Brilliant Blue was added to the reaction mixture and stirred until temperature was up to 80°C to 90°C.
5) The mixture was kept at 85 + 2°C for 30 minutes, filtered, washed and baked to get bluish green powder.

### Example 5 : Test Study an Anti-Mites Pillow on Mites-related Allergies

1. Test group: 45 volunteered patients with allergic asthmatic and allergic rhinitis problem. Man 27, woman 18; Age 5-37, average age 39. Symptom history 2-40 years, symptom level, light or medium.
Patients have variety allergic symptoms, such as nose itching, sternutation, rihinostegnosis (nose clog), eye itching and congestion, cough, chest asphyxia, roaring.

### Material

Anti-mites pillow, containing fibres with composite of the invention.

### Test method

Each patient uses Elvon pillow replacing their own pillow (no towel on top of pillowcase). One pillow per person, in a period of one month, recorded every 7 days each symptom group.

### Test record

| SYMPTOMS | Before | After | Effectiveness |
|---|---|---|---|
| Nose itching | 40 | 5 | 87.5% |
| Sternution | 41 | 3 | 92.6% |
| Rhinostegnosis (nose clog) | 37 | 15 | 40.5% |
| Eye itching & congestion | 8 | 1 | 87.5% |
| Cough | 4 | 3 | 25% |
| Chest asphyxia | 2 | 0 | 100% |
| Roaring | 19 | 9 | 52.6% |

### Conclusion

After 45 patients used the anti-mites for one month, the test result was concluded as follows: The Elvon Physical Anti-Mites Pillow has more than 80% effectiveness or improvement on symptoms like allergic asthmatic, allergic rhinitis, sternution, nose itching, eye itching and congestion, chest asphyxia. Also, it helps to reduce the laryngimsus caused by asthmatic, and then gives asthmatic patients a better sleep. The physical anti-mites pillow shows the sound and proved result of anti-mites features without any bad side effects.

### Example 6: Halo Test

### Test Method

1. The composite of Example 1 was mixed with Roberts adhesive in 0.1% formula (1000 ppm), then pasted on the back side of two carpet samples.
2. After drying (approx. 24 hours), an 1 cm diameter round piece was cut from each carpet sample and placed in a cultured agar plate. Two cultured agar plates were used in this test. One is cultured Candida albicans, another is cultured Bacillus subtilis.
3. After inoculation for 18 hours at 37°C, the halo circle, which was the area free of bacteria was measured and recorded.

### Test results

| | |
|---|---|
| Samples | Halo Circle Measurement |
| Loop carpet in Candida albicans agar plate | 2-3 mm |
| Felt carpet in Bacillus subtilis agar plate | 3-4 mm |

Summary: The composite of the invention and Robert adhesive mixture using 0.1% formula (1000 ppm) has an ability to bar the bacteria from growing or passing through the carpet to which it is applied.

## Claims

1. A composite material comprising a microparticle support having metallic ions and non-metallic cations grafted to the surface of the support.

2. The composite material of claim 1, wherein the microparticle support are polymeric organic particles, preferably said particles being
(a) a copolymer of at least three monomer units, the first monomer unit being an acrylonitrile or a derivative thereof, the second monomer unit being an acrylate ester or derivative thereof, and the third monomer unit being an ethylenically unsaturated monomer having at least one acid group, wherein in said copolymer
(b) metallic ions are grafted to the cyano groups of the first monomer units and
(c) non-metallic cations are grafted to the acid groups of the third monomer unit.

3. The composite material of claim 2 wherein:
(i) the first monomer unit has the formula 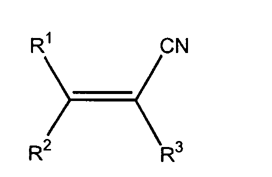 wherein R¹ R² and R³ are independently hydrogen, a C₁₋₃ alkyl group or a halogenated C₁₋₃ alkyl group, preferably R¹ is hydrogen or a C₁₋₃ alkyl group and R² and R³ are hydrogen, most preferably R¹, R² and R³ are hydrogen; said monomer may have E or Z configuration;
(ii) the second monomer unit is selected from C₁₋₃ alkyl esters of acids selected from acrylic acid, methacrylic acid and crotonic acid, and preferably is methyl or ethyl acrylate, and
(iii) the third monomer has the formula 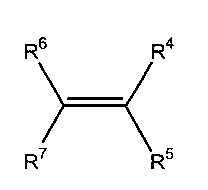
wherein R⁴ is -(CHR⁸)ₙ-CO₂H or -C(CHR⁸)ₙSO₃H (wherein R⁸ is hydrogen, a C₁₋₃ alkyl group, a halogenated C₁₋₃ alkyl group and n is an integer from 0 to 3), R⁵ is CO₂H, CO₂R⁶, a C₁₋₃ alkyl group, a C₁₋₃ halogenated alkyl group or hydrogen, R⁶ and R⁷ are independently hydrogen, a C₁₋₃ alkyl group or a C₁₋₃ halogenated alkyl group, said monomer may have E or Z configuration, preferably R₄ is -CH₂SO₃H or -CH₂CO₂H, R⁵ is hydrogen or CO₂H and R⁶ and R⁷ are hydrogen.

4. The composite material of claim 2 or 3, wherein the molar ration of monomer units in the polymer is 87 to 94 % by weight first monomer, 5 to 10 % by weight second monomer, 1 to 3 % by weight third monomer.

5. The composite material of any one of claims 2 to 4 wherein the copolymer is a block copolymer, preferably of the AB type or of the ABA type, wherein the A-block is composed of the first monomer and the B-block is a random copolymer composed of the second and third monomer.

6. The composite material of claim 1 wherein the microparticle support are polymeric inorganic particles, preferably said inorganic particles are a porous silicate, more preferably an iolite or a diatomite .

7. The composite material according to any one of claims 1 to 6 wherein
(i) the metallic ion is a silver-series ion, preferably is selected from copper, zinc and silver, and/or
(ii) the non-metallic ion is a nitrogen containing compound, preferably is a cationic dye and most preferably is selected from basic green and cationic brilliant blue, or an aliphatic or aromatic amine or ammonium compound.

8. The composite material of claim 7 wherein the metallic ion is a copper ion or a zinc ion attached to the surface of a microporous silicate.

9. The composite material according to any one of claims 1 to 8 wherein weight percent of the composite carrier: metallic ions : non metallic cations: is (20 to 40) : (1.0 to 2.0) : (0.1 to 0.3).

10. The composite material according to any one of claims 1 to 9 which has a particle diameter of 74 to 297 µm (200 to 50 mesh).

11. A method for producing the composite material according to any one of claims 1 to 10 which comprises grafting a metallic ion and/or the non-metallic cation to the surface of the organic or inorganic particles.

12. The method of claim 11 for preparing the composite material of claim 6 which comprises the steps of:
(a) preparing a proper amount of a metallic salt at a predetermined ratio;
(b) adding 20 to 40 ml 26-27% ammoniacal liquor at room temperature;
(c) mixing the ammoniacal liquor with the metallic salt to get a liquid mixture with a concentration of 1 g in 1000 to 1500 ml water;
(d) Stirring the mixture for 30 to 60 minutes and putting it aside for further use;
(e) selecting a proper amount of a silicate (diatomite or iolite, over 80 mesh) at the predetermined ratio;
(f) heating the silicate at 90°C to 100°C for 2 to 3 hours;
(g) adding the heated silicate into the mixture and stirring for 2 hours to obtain a reaction mixture;
(h) adding cationic dyes to the reaction mixture at the predetermined ratio to obtain a cationic mixture
(i) stirring the cationic mixture for 30 to 60 minutes at 80°C to 90°C;
(j) incubating the cationic mixture at 85 + 2°C for 30 to 60 minutes,
(k) filtering the cationic mixture;
(l) washing the cationic mixture; and
(m) baking the cationic mixture to obtain a powder form of the composite.

13. A carpet, cloth, rubber, filter, paint, polyshield, latex, glue or adhesives comprising the composite of claims 1 to 10.

14. A polyurethane flexible foam containing the composite material of claims 1 to 10.

15. The polyurethane flexible foam according to claim 14 which is suitable as mattress or sanitary mat.

16. A method for preparing the polyurethane flexible foam according to claim 11 which comprises preparing a mixture out of the composite material and a polyurethane prepolymer or binder and polymerizing the mixture.

17. A pharmaceutical, veterinary, cosmetic or antibacterial composition comprising the composite of claims 1 to 10.
